# DEMANDE DE BREVET EUROPEEN

(11) **EP 1 351 367 A1**
(43) Date de publication de la demande: **08.10.2003**
(21) Numéro de dépôt: 03290734.7
(22) Date de dépôt: 21.03.2003
(51) Int. Cl.: H02K 1/16, H02K 7/14, F04D 25/06

(54) **Machine électrique à stator et/ou rotor modulaire et échangeur de chaleur de véhicule automobile comprenant une telle machine**

(30) Priorité: 22.03.2002 FR 0203638
(71) Demandeur: Faurecia Industries, 92000 Nanterre (FR); Peugeot Citroen Automobiles SA, 78943 Vélizy-Villacoublay (FR)
(72) Inventeur: Torlay, Jean-Eric, 78114 Magny Les Hameaux (FR); Pera, Thierry, 90000 Belfort (FR)
(74) Mandataire: Jacobson, Claude

(57) **Abrégé**

Cette machine électrique est du type comprenant un stator (8) et un rotor (6) rotatif autour d'un axe de rotation (A). Un premier élément (8) parmi le stator et le rotor comprend des dents (12) s'étendant radialement par rapport à l'axe de rotation. Les dents portent au moins une bobine électriquement conductrice. Le premier élément (8) comprend plusieurs modules (10) espacés angulairement les uns des autres, chaque module (10) comprenant au moins deux dents (12) et un corps magnétique (11) reliant les dents du module pour former un circuit magnétique.

Application aux ventilateurs de véhicules automobiles.

## Description

La présente invention concerne une machine électrique du type comprenant un stator et un rotor rotatif autour d'un axe de rotation, un premier élément parmi le stator et le rotor comprenant des dents s'étendant radialement par rapport à l'axe de rotation, les dents portant au moins une bobine électriquement conductrice.

L'invention s'applique en particulier à la réalisation d'un moteur électrique d'entraînement d'une hélice de ventilation du radiateur de refroidissement du moteur thermique d'un véhicule automobile.

On connaît du document EP-093 817 un moteur électrique qui est du type précité et qui est destiné à l'application mentionnée ci-dessus.

Dans ce moteur, le rotor est formé par l'hélice dont la virole porte des aimants permanents.

Le stator est disposé à l'extérieur de l'hélice et comporte plusieurs dents munies chacune d'une bobine.

Dans une première variante, le stator a une forme octogonale et comporte quatre dents. Il entoure complètement l'hélice.

Dans une autre variante, le stator n'entoure pas complètement l'hélice et ne porte que deux dents. La puissance du moteur de la seconde variante est différente de celle de la première variante.

Les structures décrites dans ce document ne permettent pas d'atteindre une gamme étendue de puissances de moteurs. De plus, chaque moteur de puissance différente a un coût relativement important.

Un but de l'invention est donc de pouvoir fournir des machines électriques du type précité dans une gamme de puissances étendue et à coût réduit.

A cet effet, l'invention a pour objet une machine du type précité, caractérisée en ce que le premier élément comprend plusieurs modules espacés angulairement les uns des autres, chaque module comprenant au moins deux dents et un corps magnétique reliant les dents du module pour former un circuit magnétique.

Selon des modes particuliers de réalisation, la machine électrique peut comprendre l'une ou plusieurs des caractéristiques suivantes, prise(s) isolément ou selon toutes les combinaisons techniquement possibles :
- au moins un module comprend au moins trois dents espacées angulairement les unes des autres et portant chacune une bobine électriquement conductrice pour former des phases d'induction magnétique, et la bobine d'une dent angulairement plus intérieure dudit module comporte moins de spires qu'une bobine d'une dent angulairement plus extérieure dudit module,
- au moins un module comprend au moins trois dents espacées angulairement les unes des autres et portant chacune une bobine électriquement conductrice pour former des phases d'induction magnétique, et une dent angulairement plus extérieure dudit module s'étend radialement plus fortement vers le second élément parmi le rotor et le stator qu'une dent angulairement plus intérieure du module,
- le premier élément est le stator,
- le rotor porte des aimants permanents de polarité alternée,
- la machine constitue un moteur,
- le stator est disposé à l'extérieur du rotor, et le rotor est formé par une hélice, la machine constituant un ventilateur.

L'invention a en outre pour objet un ensemble comprenant un échangeur de chaleur et un ventilateur de création d'un écoulement d'air de balayage de l'échangeur de chaleur, le ventilateur étant une machine telle que définie ci-dessus.

L'invention a également pour objet un véhicule automobile comprenant un ensemble tel que défini ci-dessus.

L'invention sera mieux comprise à la lecture de la description qui va suivre, donnée uniquement à titre d'exemple et faite en se référant aux dessins annexés, sur lesquels :
- la figure 1 est une vue schématique de face d'un ensemble d'échangeur de chaleur et de ventilateur selon l'invention,
- la figure 2 est une vue schématique agrandie illustrant la structure d'un module du stator du ventilateur de la figure 1, et
- la figure 3 est une vue analogue à la figure 2 illustrant une variante du stator des figures 1 et 2.

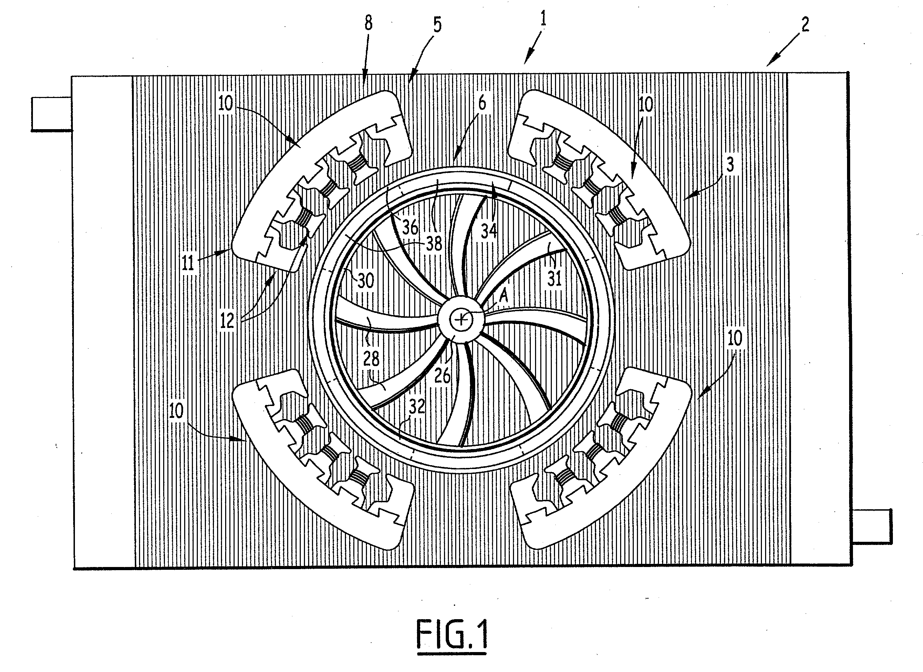

La figure 1 illustre schématiquement un ensemble 1 comprenant un échangeur de chaleur 2 et un ventilateur 3. L'ensemble 1 est par exemple disposé à l'extrémité avant d'un véhicule automobile.

L'échangeur de chaleur 2 peut être le radiateur de refroidissement du moteur thermique du véhicule automobile. Dans une variante, il peut également s'agir d'un échangeur de chaleur d'un système de climatisation de l'habitacle du véhicule automobile.

Le ventilateur 3 comprend un moteur électrique synchrone 5 et une hélice 6 montée à rotation, par des moyens non-représentés, autour d'un axe A pour pouvoir tourner sous l'action du moteur 5. L'hélice 6 crée alors un écoulement d'air balayant l'échangeur de chaleur 2.

Sur la figure 1, le ventilateur 3 a été disposé à l'avant de l'échangeur de chaleur 2, c'est à dire en configuration soufflante. Toutefois, l'échangeur de chaleur 3 peut en variante être disposé à l'arrière de l'échangeur de chaleur 2, c'est à dire en configuration aspirante.

Le moteur électrique 5 comprend un stator 8 et un rotor formé par l'hélice 6, comme cela sera décrit par la suite.

Le stator 8 comprend quatre modules 10 de structure analogue et qui sont disposés autour de l'hélice 6 en étant espacés angulairement les uns des autres par rapport à l'axe central A.

Dans l'exemple représenté, les modules 10 sont régulièrement répartis angulairement autour de l'axe central A.

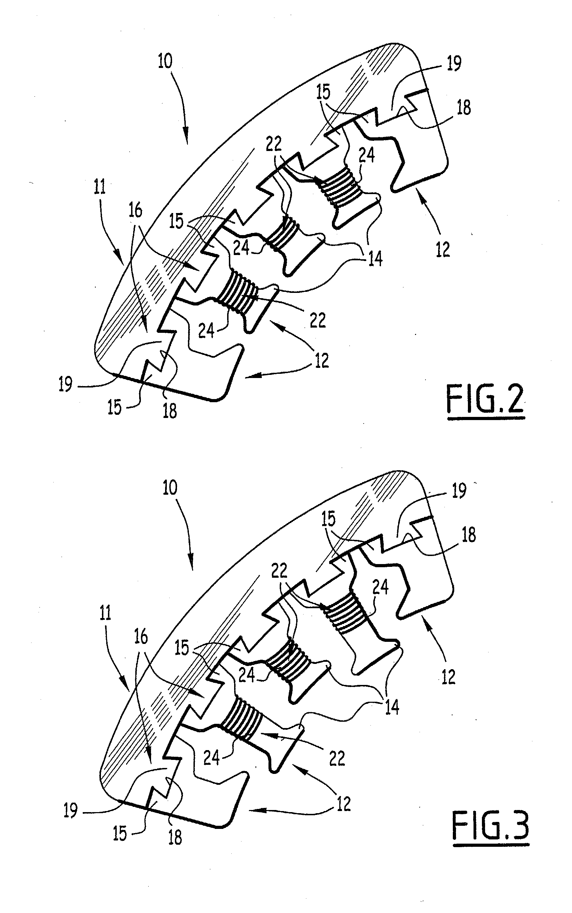

Compte-tenu de l'identité de structure des différents modules, seul un module 10 sera décrit par la suite en regard de la figure 2.

Le module 10 considéré comprend un corps magnétique 11 et cinq dents 12 délimitant entre elles des encoches 13.

Le corps magnétique 11 a une forme générale de secteur d'anneau. Il est réalisé par exemple par empilement de tôles minces en fer doux.

Les dents 12 font saillie radialement vers l'intérieur depuis le corps 11. Chaque dent 12 comporte à son extrémité radialement intérieure 14 un épanouissement.

Chaque dent 12 comporte également à son extrémité radialement extérieure 15 un épanouissement.

Le module 10 comprend des moyens 16 d'assemblage des dents 12 au corps 11 qui comprennent pour chaque dent 12 une gorge 18 axiale et de section transversale en queue d'aronde ménagée dans l'extrémité radialement extérieure 15 de la dent, et une nervure complémentaire 19 ménagée sur le corps 11 en regard de la dent 12.

Chaque nervure 19 est logée dans la gorge 18 correspondante. Des plaques d'extrémité axiale peuvent également être prévues de part et d'autre du corps 11 pour retenir axialement les dents 12 par rapport au corps 11.

Les dents 12 sont réalisées, par exemple, en un matériau dit « diélectromagnétique » ou « magnétodiélectrique ». Ce matériau est par exemple à base d'une poudre magnétique et d'un liant diélectrique. Les dents 12 sont réalisées par compactage et chauffage d'un mélange de cette poudre et de la résine.

La poudre magnétique est par exemple de la poudre fer et le liant diélectrique une résine thermoplastique.

Plus de renseignements peuvent être trouvés dans le document EP-834 211 sur ces matériaux et la réalisation de pièces magnétiques à partir de ceux-ci.

On notera que les deux dents 12 les plus angulairement extérieures ont chacune une forme dissymétrique. Ces deux dents 12 ne portent pas de bobine électriquement conductrice. Elles forment un circuit magnétique avec le corps 11.

Les trois dents 12 centrales sont chacune sensiblement symétrique par rapport à un plan radial médian.

Elles portent en outre chacune une bobine électriquement conductrice 22. Ces bobines 22 sont raccordées électriquement à un circuit d'alimentation en courants polyphasés.

Ainsi, chaque bobine 22 définit une phase d'induction magnétique de sorte que le stator 10, lorsque ses bobines 22 sont alimentées électriquement, va créer un champ d'induction magnétique tournant autour de l'axe A.

Chacune des trois dents 12 angulairement intérieures du module 10 considéré forme donc également une partie du circuit magnétique et canalise les lignes du champ d'induction magnétique créé par la bobine 22 qu'elle porte.

La bobine 22 centrale comporte moins de spires 24 que les deux autres bobines 22 du module 10. Ces deux autres bobines 22 sont situées angulairement plus à l'extérieur que la bobine 22 centrale.

En outre, le diamètre des fils électriquement conducteurs constituant la bobine 22 centrale est plus faible que celui des fils constituant les deux autres bobines 22 du module 10.

L'hélice 6 comprend :
- un moyeu central 26 monté à rotation autour de l'axe central A par des moyens non-représentés,
- des pales 28 qui s'étendent radialement vers l'extérieur depuis le moyeu 26, et
- une virole 30 circulaire qui relie les extrémités radialement extérieures 31 des pales.

La virole 30 est entourée extérieurement successivement d'une bague 32 en un matériau magnétique doux, d'une bague multipolaire 34 et d'une bague de retenue 36.

Des secteurs angulaires 38 de la bague multipolaire 34 sont aimantées de manière permanente et opposée afin de définir une succession de pôles magnétiques de polarité alternée.

La bague de retenue 36 est formée en un matériau amagnétique et est destinée à retenir radialement la bague multipolaire 34 contre l'action de la force centrifuge, lorsque l'hélice 6 est entraînée en rotation autour de l'axe A.

La bague 32 ferme le circuit magnétique formé par ailleurs par les modules 10 du stator 8.

Le fonctionnement du moteur électrique 5 est globalement le même que celui décrit dans le document EP-093 817. Ainsi, le champ d'induction magnétique tournant produit par le stator 8 provoque l'entraînement en rotation de l'hélice 6 autour de l'axe A.

Dans l'ensemble 1 de la figure 1, le stator 8 comprend quatre modules 10. Toutefois, des modules 10 analogues peuvent être utilisés pour former des moteurs électriques 5 dont les stators 8 ne comprennent par exemple que deux modules 10, ou plus de quatre modules, par exemple six modules.

On conçoit que la puissance du moteur électrique obtenu varie en fonction du nombre de modules 10 que le stator 8 comprend.

Ainsi, les mêmes modules 10 de stator peuvent être utilisés pour fournir des moteurs 5 dans une gamme étendue de puissances.

En outre, ces mêmes modules 10 étant utilisés pour toute cette gamme de puissances, leur standardisation est plus importante de sorte que le coût des moteurs électriques 5 ainsi produits est réduit.

On notera en outre que la structure des modules 10 présente un avantage supplémentaire distinct de celui qui vient d'être mentionné.

En effet, du fait de l'espacement angulaire des modules 10 les uns des autres, le flux magnétique induit par les aimants 38 de l'hélice 6 dans chaque bobine 22 d'un module 10 n'est pas identique. Il s'avère que ce flux est plus important dans la bobine centrale 22 que dans les bobines 22 les plus angulairement extérieures.

Ainsi, la force électromotrice induite dans chaque spire 24 de la bobine 22 centrale s'avère plus importante que dans chaque spire 24 des deux autres bobines 22 du module 10 considéré.

L'utilisation d'un nombre plus faible de spires 24 dans la bobine 22 centrale permet de compenser cette différence de flux de sorte que la force électromotrice induite dans chaque bobine 22 de chaque module 10 est sensiblement la même.

Par ailleurs, l'utilisation de fils électriquement conducteurs de diamètre plus faible pour constituer les bobines 22 centrales permet de compenser les différences de nombre de spires 24 pour que l'intensité du courant traversant chaque bobine 22 soit sensiblement égale.

Ainsi, le circuit électrique d'alimentation du stator 8 ne nécessite pas un système électronique de commande prenant en compte l'apparition de forces électromotrices distinctes dans les bobines 22 ou des résistances électriques différentes pour les bobines 22. Ce système électronique de commande est donc simple, tout comme le circuit électrique d'alimentation.

La figure 3 illustre une variante qui permet également de compenser la différence de flux magnétique qui tend à être induit dans les bobines 22.

Dans cette variante, les bobines 22 possèdent le même nombre de spires 24 et les fils utilisés pour les réaliser ont le même diamètre. Cependant, les deux dents 12 adjacentes à la dent centrale 12 ont une étendue radiale plus importante que la dent 12 centrale. Les extrémités radialement intérieures 14 de ces deux dents 12 sont donc plus proches de l'hélice 6 que l'extrémité radialement intérieure de la dent 12 centrale.

Ainsi, l'entrefer en regard de ces deux dents 12, qui portent les bobines angulairement extérieures, est plus réduit de sorte qu'elles tendent à capter un flux magnétique induit plus important. Ceci permet de compenser la répartition irrégulière du flux magnétique induit due à l'espacement angulaire des modules 10 et mentionnée ci-dessus.

Les forces électromotrices induites dans les bobines 22 et les résistances électriques des bobines 22 sont donc équilibrées.

On notera que cette variante peut être combinée à celle des figures 1 et 2, c'est à dire que les modules 10 peuvent comprendre à la fois de dents 12 d'étendues radiales différentes et des bobines 22 comportant des nombres différents de spires.

L'utilisation d'un matériau magnétodiélectrique pour former les dents 12 portant les bobines 22 permet de faciliter le recyclage du moteur 5. En effet, un tel matériau peut, comme décrit dans la demande EP-834 211, être broyé en fragments s'écoulant au travers des spires 24 des bobines 22.

En outre, la réalisation des dents 12 sous forme indépendante des corps 11 permet de limiter les problèmes de fabrication en un matériau magnétodiélectrique. En effet, il s'avère que la réalisation de pièces de grandes dimensions et de formes complexes dans ces matériaux est particulièrement délicate. Ici, les pièces réalisées dans de tels matériaux sont de formes simples et de dimensions réduites.

Enfin, les corps 11 sont réalisés par empilement de tôles minces, puisque leur broyage en fragments n'est pas nécessaire pour améliorer la recyclabilité.

De manière plus générale, les principes ci-dessus peuvent être appliqués au rotor d'une machine électrique qui sera réalisé en différents modules espacés angulairement les uns des autres et dont des dents s'étendant radialement porteront des bobines.

On notera qu'une même machine électrique peut comprendre un stator et un rotor incorporant les principes ci-dessus.

On notera également que la machine électrique peut être non pas un moteur mais un générateur.

De plus, les modules peuvent comprendre des nombres quelconques de bobines et de dents, toutes les dents d'un module pouvant porter une bobine.

Ainsi, les modules peuvent posséder une étendue angulaire plus faible que celle représentée aux figures 1 à 3 pour permettre de réaliser des moteurs de puissances très variées.

## Revendications

1. Machine électrique (5) du type comprenant un stator (8) et un rotor (6) rotatif autour d'un axe de rotation (A), un premier élément (8) parmi le stator et le rotor comprenant des dents (12) s'étendant radialement par rapport à l'axe de rotation, les dents portant au moins une bobine électriquement conductrice, **caractérisée en ce que** le premier élément (8) comprend plusieurs modules (10) espacés angulairement les uns des autres, chaque module (10) comprenant au moins deux dents (12) et un corps magnétique (11) reliant les dents du module pour former un circuit magnétique.

2. Machine selon la revendication 1, **caractérisée en ce qu'**au moins un module (10) comprend au moins trois dents (12) espacées angulairement les unes des autres et portant chacune une bobine (22) électriquement conductrice pour former des phases d'induction magnétique, et **en ce que** la bobine (22) d'une dent angulairement plus intérieure (12) dudit module (10) comporte moins de spires (24) qu'une bobine (22) d'une dent angulairement plus extérieure dudit module (10).

3. Machine selon la revendication 1 ou 2, **caractérisée en ce qu'**au moins un module (10) comprend au moins trois dents (12) espacées angulairement les unes des autres et portant chacune une bobine (22) électriquement conductrice pour former des phases d'induction magnétique, et **en ce qu'**une dent (12) angulairement plus extérieure dudit module (10) s'étend radialement plus fortement vers le second élément (6) parmi le rotor et le stator qu'une dent (12) angulairement plus intérieure du module (10).

4. Machine selon l'une des revendications précédentes, **caractérisée en ce que** le premier élément est le stator (8).

5. Machine selon la revendication 4, **caractérisée en ce que** le rotor (6) porte des aimants permanents de polarité alternée.

6. Machine électrique selon l'une des revendications précédentes, **caractérisée en ce qu'**elle constitue un moteur.

7. Machine selon la revendication 6, **caractérisée en ce que** le stator (8) est disposé à l'extérieur du rotor, et **en ce que** le rotor est formé par une hélice (6), la machine constituant un ventilateur (3).

8. Ensemble (1) comprenant un échangeur de chaleur (2) et un ventilateur (3) de création d'un écoulement d'air de balayage de l'échangeur de chaleur (2), **caractérisé en ce que** le ventilateur (3) est une machine selon la revendication 7.

9. Véhicule automobile, **caractérisé en ce qu'**il comprend un ensemble selon la revendication 8.
